# DEMANDE DE BREVET EUROPEEN

(11) **EP 3 944 724 A1**
(43) Date de publication de la demande: **26.01.2022**
(21) Numéro de dépôt: 20186983.1
(22) Date de dépôt: 21.07.2020
(51) Int. Cl.: H05B 45/10, H05B 47/115, A47F 11/10

(54) **DISPOSITIF DE PRESENTATION D'UN OBJET DECORATIF**

(71) Demandeur: The Swatch Group Research and Development Ltd, 2074 Marin (CH)
(72) Inventeur: DUBUGNON, Dominique, 1162 Saint-Prex (CH); BLATTER, Cédric, 1291 Commugny (CH)
(74) Mandataire: ICB SA

(57) **Abrégé**

L'invention concerne un dispositif de présentation (1) d'un objet décoratif (2), comprenant un caisson (4) pourvu d'un élément de support (5) sur lequel est définie une zone d'intérêt (3) dans laquelle est susceptible d'être disposé et/ou manipulé ledit objet décoratif (2), le dispositif de présentation (1) comportant :
- des dispositifs d'identification (6a, 6b) de l'observateur et de l'objet décoratif (2) ;
- un système d'éclairement (7) de la zone d'intérêt (3) comprenant un dispositif d'éclairage principal (8a) et un dispositif d'éclairage secondaire (8b) pourvus d'éléments électroluminescents qui sont configurés pour réaliser l'éclairement de cette zone d'intérêt (3) en fonction du profil de vision de l'observateur et/ou en fonction d'un état comportemental de l'observateur et/ou en fonction de caractéristiques de l'objet (3) ;
- une unité de traitement (10) configurée pour :
▪ générer une instruction de pilotage des propriétés d'éclairage du dispositif d'éclairage principal (8a) et/ou du dispositif d'éclairage secondaire (8b) en fonction de critères de perception visuelle de l'objet (3) par l'observateur ;
▪ contrôler le dispositif d'éclairage principal (8a) et/ou le dispositif d'éclairage secondaire (8b) en fonction de ladite instruction de pilotage des propriétés de ces dispositifs d'éclairage (8a, 8b).

## Description

### Domaine technique

L'invention concerne un dispositif de présentation d'un objet décoratif.

### Arrière-plan technologique

Dans l'état de la technique, des objets tels que des pièces d'horlogerie notamment celles comprenant des matériaux précieux ou des pierres précieuses, sont classiquement présentés à la vente dans des dispositifs de présentation équipés de lampes destinées à éclairer de tels objets afin de les rendre visibles à des personnes qui seraient situées à proximité de ces dispositifs.

Toutefois un des inconvénients majeurs de tels dispositifs est de ne pas suffisamment mettre en valeur de ces objets du fait de lampes et plus largement de systèmes d'éclairage qui sont souvent inadaptés.

On comprend donc qu'il existe un besoin d'une solution participant à la réalisation d'un éclairement optimisé de ces objets décoratifs.

### Résumé de l'invention

Un but de l'invention est par conséquent de proposer une solution qui permet d'améliorer l'éclairement d'objets décoratifs afin de les mettre plus en valeur à partir notamment d'un pilotage dynamique, adaptatif et automatique de cet éclairement.

L'invention concerne un dispositif de présentation d'un objet décoratif, comprenant un caisson pourvu d'un élément de support sur lequel est définie une zone d'intérêt dans laquelle est susceptible d'être disposé et/ou manipulé ledit objet décoratif, le dispositif de présentation comportant :
- des dispositifs d'identification de l'observateur et de l'objet décoratif ;
- un système d'éclairement de la zone d'intérêt comprenant un dispositif d'éclairage principal et un dispositif d'éclairage secondaire pourvus d'éléments électroluminescents qui sont configurés pour réaliser l'éclairement de cette zone d'intérêt en fonction du profil de vision de l'observateur et/ou en fonction d'un état comportemental de l'observateur et/ou en fonction de caractéristiques de l'objet ;
- une unité de traitement configurée pour :
   ▪ générer une instruction de pilotage des propriétés d'éclairage du dispositif d'éclairage principal et/ou du dispositif d'éclairage secondaire en fonction de critères de perception visuelle de l'objet par l'observateur ;
   ▪ contrôler le dispositif d'éclairage principal et/ou le dispositif d'éclairage secondaire en fonction de ladite instruction de pilotage des propriétés de ces dispositifs d'éclairage.

Dans d'autres modes de réalisation :
- le dispositif d'identification comprend un module d'authentification de l'observateur et un module d'indentification d'un état comportemental de cet observateur ;
- le caisson comprend une base et un plafond ainsi que des faces latérales, arrière et frontale délimitant avec cette base et ce plafond un volume intérieur dans lequel est définie la zone d'intérêt, ledit caisson présentant une zone de visualisation de l'objet depuis l'extérieur comprise en tout ou partie dans la face frontale ;
- l'unité de traitement est reliée aux dispositifs d'identification de l'observateur et de l'objet décoratif ;
- l'unité de traitement est reliée à une base de données comprenant des données de profil de vision de l'observateur, des données de profil de vision relatif à l'état comportemental de l'observateur, des données de caractéristiques d'objets décoratifs et des données d'identification de l'observateur et/ou de l'objet ;
- le dispositif d'éclairage principal comprend un premier module d'éclairage, un deuxième module d'éclairage et/ou un troisième module d'éclairage pourvus chacun d'une pluralité d'éléments électroluminescents ;
- le dispositif d'éclairage principal comprend un premier module d'éclairage, un deuxième module d'éclairage et/ou un troisième module d'éclairage pourvus chacun d'un unique élément électroluminescent qui est couplé à un modulateur ;
- le premier module d'éclairage est agencé au-dessus de la zone d'intérêt et donc du plateau de l'élément de support ;
- le deuxième module d'éclairage est disposé en dessous de la zone d'intérêt et donc du plateau de l'élément de support ;
- le troisième module d'éclairage est agencé dans la périphérie de la zone d'intérêt et donc du plateau de l'élément de support ;
- le dispositif d'éclairage principal comprend un élément de réglage agencé en tout ou partie autour de la zone d'intérêt et s'étendant verticalement entre la base et le plafond du caisson ;
- l'élément de réglage en étant contrôlé par l'unité de traitement peut varier entre un état de réflectance d'un rayonnement lumineux provenant du premier, deuxième ou troisième module d'éclairage vers la zone d'intérêt, et un état de diffusion des rayonnements lumineux provenant du dispositif d'éclairage secondaire vers la zone d'intérêt ;
- le dispositif de présentation comprend un dispositif de surveillance de la tête de l'observateur contemplant l'objet décoratif et un dispositif de mesure de la luminance perceptible par l'œil de cet observateur ;
- le dispositif d'éclairage secondaire est agencé à l'extérieur du caisson notamment au-dessus de ce caisson, et
- l'objet décoratif est une pièce de bijouterie ou une pièce d'horlogerie.

### Brève description des figures

L'invention sera décrite ci-après de manière plus détaillée à l'aide des figures ici annexées, données à titre d'exemples nullement limitatifs, dans lesquelles :
- la figure 1 est une représentation schématique d'un dispositif de présentation d'un objet décoratif, selon un mode de réalisation de l'invention, et
- la figure 2 est une illustration d'un caisson d'exposition de ce dispositif de présentation dans lequel est disposé l'objet décoratif, selon le mode de réalisation de l'invention.

### Description détaillée de l'invention

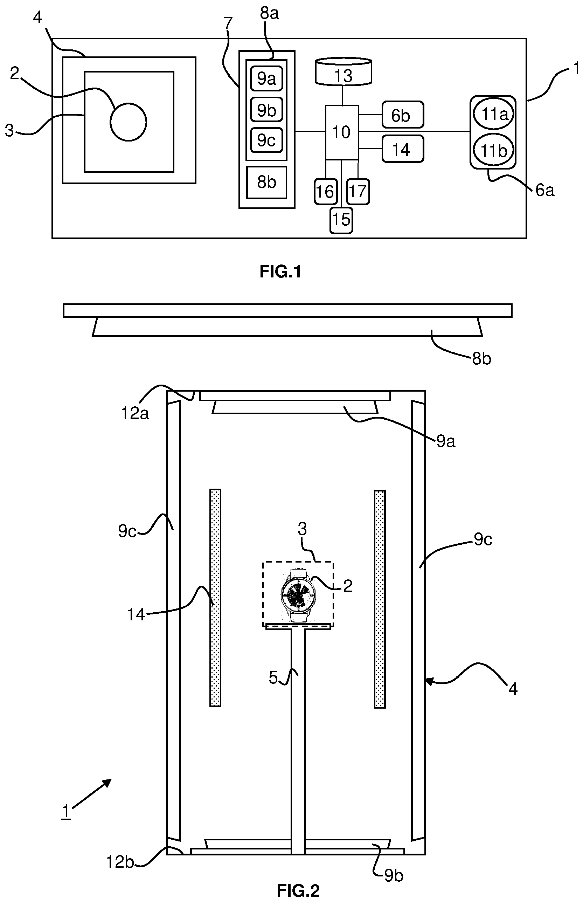

Sur la figure 1 est représenté un dispositif de présentation 1 d'un objet décoratif 2 comprenant un caisson d'exposition 4 pourvu d'un élément de support 5 sur lequel est définie une zone d'intérêt 3 dans laquelle est susceptible d'être disposé ledit objet décoratif 2. De manière non limitative et non exhaustive, cet objet décoratif 2 peut être une pièce d'horlogerie, une pièce de bijouterie ou encore une pierre précieuse.

Un tel dispositif de présentation 1 vise à offrir à une personne observant ou manipulant l'objet décoratif 2 compris dans la zone d'intérêt 3, une perception visuelle de cet objet 3 qui lui soit adaptée voire personnalisée. Cette perception visuelle peut être définie comme étant le résultat de l'interprétation d'au moins une information relative à cet objet que fait le cerveau de cette personne. Cette information est comprise dans un rayonnement lumineux capté par photoréception et entrant à travers les pupilles de cette personne de sorte à activer ses cellules réceptives qui se trouvent dans les rétines de ses yeux. Les signaux produits par ces cellules étant par la suite transmis par le nerf optique jusqu'au cerveau. Dans la suite de cette description de l'invention, cette personne observant ou manipulant cette objet décoratif 2 dans la zone d'intérêt 3, sera appelée un « observateur ».

Dans ce dispositif de présentation 1, le caisson 4 visible sur la figure 2, peut aussi être appelé « caisson vitrine » ou encore « boîte vitrine ». Ce caisson 4 comprend une base 12a et un plafond 12b ainsi que des faces latérales, arrière et frontale qui sont vitrées. La face frontale est transparente et les faces latérales et arrière peuvent aussi être transparentes ou encore translucides. Dans une variante, la base 12a et le plafond 12b de ce caisson 4 peuvent également être vitrés et aussi transparentes ou translucides. Toutes ces faces délimitent avec la base 12a et le plafond 12b, un volume intérieur du caisson 4 comportant la zone d'intérêt 3 dans laquelle est placé l'objet décoratif 2. Cette zone d'intérêt 3 est comprise sur tout ou partie d'un plateau de l'élément de support 5. Cet élément de support 5 comprend également au moins un élément de fixation de ce plateau dans le caisson 4. Ce dit au moins un élément de fixation est de préférence relié à la base 12a de ce caisson 4 en formant ainsi un pied de l'élément de support 5. Dans des variantes, ce dit au moins un élément de fixation peut être relié à la base 12a et/ou au plafond 12b et/ou à une ou plusieurs faces latérales et/ou à la face arrière. On notera que le plateau et ledit au moins un élément de fixation peuvent être transparents ou translucides. En outre, le caisson 4 comprend une zone de visualisation de l'objet depuis l'extérieur. Cette zone est définie en tout ou partie dans la face frontale de ce caisson 4. Cette zone de visualisation peut être une ouverture ménagée dans cette face frontale ou encore une partie transparente de cette face frontale. Dans le cas d'une ouverture, cette dernière peut éventuellement être pourvue d'un filtre polarisé et modulable spectralement, spatialement, et temporellement. On notera enfin que le caisson 4 présente une section transversale parallèle à au plafond 12a et/ou à la base 12b qui est de forme polygonale.

Le dispositif de présentation 1 comprend également une unité de traitement 10 qui participe notamment à contrôler/gérer l'éclairement de la zone d'intérêt 3 en fonction de l'observateur identifié et/ou de l'état comportemental de ce dernier et/ou des caractéristiques de l'objet 3 comme nous le verrons par la suite. Cette unité de traitement 10 qui peut être un ordinateur, comprend des ressources matérielles et logicielles en particulier au moins un processeur coopérant avec des éléments de mémoire. Cette unité de traitement 10 est apte à exécuter des instructions pour la mise en œuvre d'un programme d'ordinateur afin d'assurer la gestion de l'éclairement de la zone d'intérêt 3. Une telle unité de traitement 10 est connectée à d'autres éléments du dispositif de présentation 1 tels que des dispositifs d'identification 6a, 6b de l'observateur et de l'objet décoratif 2, un dispositif de surveillance 15 de la tête de l'observateur, un dispositif de mesure de la luminance 16 relative à une partie d'une surface de l'objet décoratif 2, une base de données 13 et un système d'éclairement 7 de ladite zone d'intérêt 3.

Le dispositif d'identification 6a de l'observateur comprend un module d'authentification 11a de l'observateur et un module d'indentification 11b d'un état comportemental de cet observateur. Le module d'authentification 11a de l'observateur est configuré pour participer à la mise en œuvre d'une identification ou authentification de cet observateur à partir de technologies bien connues de l'état de la technique, relatives à une authentification biométrique ou encore à de la radio authentification et ce, à partir des données d'identification de observateurs archivées dans la base de données 13. Un tel module 11a est mis en œuvre par le dispositif d'identification 6a lorsque l'observateur est connu du dispositif de présentation 1 et que ses données d'identification/d'authentification sont alors déjà présentes dans la base de données 13. S'agissant du module d'indentification 11b d'un état comportemental de l'observateur, il est quant à lui mis en œuvre lorsque l'observateur n'est pas connu du dispositif de présentation 1 ou en complément de l'authentification de cet observateur effectuée par le module d'authentification 11a. Ce module d'identification 11b d'un état comportemental de l'observateur comprend des systèmes de capture d'au moins une image et d'au moins un élément sonore relatifs à l'observateur associés à des algorithmes de traitement numérique d'images et d'éléments sonores. Ainsi un tel module 11b peut permettre par exemple d'identifier un état comportemental agité ou à l'inverse plutôt calme de l'observateur à partir de la capture de mouvements du corps de cet observateur et de la voix de ce dernier par exemple. Dans ce contexte, la capture de mouvements de bras de l'observateur présentant une fréquence et une amplitude élevées couplées à une tonalité de voix également élevée peut traduire un état comportemental plutôt agité. Ce module d'identification 11b d'un état comportemental est aussi apte à évaluer de manière non limitative et non exhaustive, l'âge, le genre, la température, la fréquence respiratoire de cet observateur. Cette identification de l'état comportemental de l'observateur est prise en compte par le dispositif de présentation 1 afin de définir un éclairement approprié de la zone d'intérêt.

Ainsi que nous l'avons vu, le dispositif de présentation 1 comprend aussi une dispositif d'identification 6b de l'objet décoratif 2. Ce dispositif d'identification 6b de l'objet décoratif 2 met en œuvre des systèmes de capture d'au moins une image, associés à des algorithmes de traitement numérique d'images. Un tel dispositif participe à l'identification des objets à partir des données d'identification d'objets archivées dans la base de données 13. Ces données d'indentification d'objets comportent de manière non exhaustive et non limitative : des données de représentation bidimensionnelle ou tridimensionnelle de ces objets décrivant notamment la forme, les dimensions et ou l'aspect esthétique de chaque objet ainsi que des données relatives à la nature de la matière constituant cet objet. Ces données peuvent également comprendre des données d'information du type code barre bidimensionnel ou tridimensionnel ou numéro de série qui peuvent être présents sur l'objet.

Dans cette configuration, on comprend donc que l'unité de traitement 10 et les dispositifs d'identification 6a, 6b de l'observateur et de l'objet décoratif 2 ainsi que la base de données 13 participent ensemble à authentifier l'observateur et/ou l'objet décoratif 2 et/ou un état comportemental de cet observateur afin de générer éclairement de la zone d'intérêt 3 qui soit spécifique à cet observateur.

Plus précisément, la configuration d'un éclairement de la zone d'intérêt 3 est réalisée en fonction d'un profil de vision de l'observateur identifié/authentifié et/ou d'au moins une caractéristique de l'objet identifié et/ou du profil comportemental de cet observateur. Cette configuration de l'éclairement est effectuée par l'unité de traitement 10 qui pilote le système d'éclairement 7. Un tel système 7 comprend un dispositif d'éclairage principal 8a et un dispositif d'éclairage secondaire 8b ainsi qu'un élément de réglage 14 de l'éclairement de la zone d'intérêt 3. Ce dispositif d'éclairage principal 8a est compris dans le caisson 4 tandis que le dispositif d'éclairage secondaire 8b est agencé à l'extérieur de ce caisson 4. Ces dispositifs d'éclairage principal et secondaire 8a, 8b sont pourvus chacun d'une pluralité d'éléments électroluminescents. Dans une alternative chaque dispositif d'éclairage 8a, 8b peut comprendre un unique élément électroluminescent qui est couplé à un modulateur. Dans ce contexte, ce modulateur est apte à modifier le spectre lumineux de cette diode ainsi que l'intensité/amplitude, l'orientation et/ou le degré de directivité et/ou la diffusion du rayonnement lumineux de cette diode. Un élément électroluminescent comprend une diode électroluminescente et également dans une alternative une microlentille ou d'autres moyens optiques. On notera dans une variante qu'un élément électroluminescent peut être dépourvu d'une telle diode.

Le dispositif d'éclairage principal 8a comporte trois modules d'éclairage 9a à 9c. S'agissant du dispositif d'éclairage secondaire 8b, il comprend quant à lui un module d'éclairage agencé au-dessus du caisson 4. Ce module d'éclairage est disposé à une hauteur mesurée en partant du niveau du sol qui est supérieure à celle des trois modules d'éclairage du dispositif d'éclairage principal 8a. Cet unique module d'éclairage du dispositif d'éclairage secondaire 8b émet un rayonnement lumineux qui englobe le caisson 4 ainsi que la zone périphérique de ce dernier. Un tel module d'éclairage génère de préférence un éclairage homogène dans l'environnement de ce caisson 4.

Dans le dispositif d'éclairage principal 8a, le premier module d'éclairage 9a est agencé au-dessus de la zone d'intérêt 3 et donc du plateau de l'élément de support 5. Plus précisément, ce premier module 9a est disposé sur tout ou partie du plafond 12b du caisson 4. Le dispositif d'éclairage 8a comprend également un deuxième module d'éclairage 9b disposé en dessous de la zone d'intérêt 3 et donc du plateau de l'élément de support 5. En particulier, ce deuxième module d'éclairage 9b est agencé en tout ou partie sur la base 12a du caisson 4. Enfin, ce dispositif d'éclairage 8a comprend un troisième module d'éclairage 9c agencé dans la périphérie de la zone d'intérêt 3 et donc du plateau de l'élément de support 5. Effectivement, ce troisième module est disposé dans tout ou partie des coins du caisson 4. Chaque coin du caisson 4 est compris dans un angle saillant du caisson 4, formé par l'intersection des faces de ce dernier entre elles. Ces coins s'étendent verticalement entre la base 12a et le plafond 12b de ce caisson 4. Autrement dit, la direction extension de chacun de ces coins est sensiblement perpendiculaire ou perpendiculaire à un plan comprenant le plafond 12b ou la base 12a.

Dans une variante, le dispositif d'éclairage principal 8a comprend que les premier et deuxième modules d'éclairage 9a, 9b avec l'élément de réglage 14 de l'éclairement de la zone d'intérêt 3 que nous décrivons dans la suite de cette description.

Dans une autre variante, le dispositif d'éclairage principal 8a comprend uniquement le troisième module d'éclairage 9c avec l'élément de réglage 14. On comprend que dans cette dernière variante, la base 12a et le plafond 12b sont de préférence chacune transparente ou translucide.

Cet élément de réglage 14 qui est connecté à l'unité de traitement 10, est agencé en tout ou partie autour de la zone d'intérêt 3 et s'étend verticalement entre la base 12a et le plafond 12b du caisson 4. Un tel élément de réglage 14 comprend une ouverture au travers de laquelle la zone d'intérêt 3 et plus particulièrement l'objet décoratif 2 peut être vu voire manipulé par l'observateur. Cet élément de réglage 14 qui est contrôlé par l'unité de traitement 10, peut varier entre les états suivants :
- un état de réflectance d'un rayonnement lumineux provenant du premier, deuxième ou troisième module d'éclairage 9a à 9c vers la zone d'intérêt 3, et
- un état de diffusion des rayonnements lumineux provenant du troisième module d'éclairage 9c et/ou du dispositif d'éclairage secondaire 8b vers la zone d'intérêt 3.

Cet élément de réglage 14 peut être un panneau disposé dans le caisson 4 entre la zone d'intérêt 3 et essentiellement les faces latérales et arrière. Dans une alternative, cet élément de réglage 14 peut être appliqué sur les surfaces internes et/ou externes de ces faces latérales et arrière à la manière d'un revêtement. Dans une alternative, cet élément de réglage 14 peut être directement compris dans l'épaisseur de ces faces latérales et arrière. On notera que dans ces deux alternatives, le fonctionnement de l'élément de réglage 14 peut être réalisé à partir de technologies du type électrochromique, photochromique, thermochromique ou encore à cristaux liquides.

Lorsque l'observateur est déjà connu du dispositif de présentation 1 et qu'il est donc authentifié, la configuration de l'éclairement va alors être réalisée par l'unité de traitement 10 qui est connectée au système d'éclairement 7 et à la base de données 13. Cette configuration est alors effectuée sur la base de critères de perception visuelle évalués à partir de données comprises dans la base de données 13 et qui sont relatives :
- au profil de vision de l'observateur authentifié, et/ou
- à des caractéristiques de l'objet décoratif 2 identifié telles que des caractéristiques physiques, chimiques, esthétiques, fonctionnelles et structurelles, et/ou
- au profil de vision relative à l'état comportemental identifié de cet observateur

Les données de profil de vision de l'observateur comprennent des données physiologiques et biologiques ayant un rôle dans la perception visuelle. On notera que ces données physiologiques et biologiques peuvent être relatives :
- à l'âge ;
- au genre de l'observateur ;
- à des caractéristiques du système oculaire de cet observateur (sensibilité à l'éblouissement,) ;
- à des caractéristiques du système nerveux de l'observateur ;
- à des caractéristiques de résistance et/ou d'endurance visuelle de cet observateur.

Les données de profil de vision relative à l'état comportemental identifié de l'observateur comprennent des données physiques et psychologiques ayant un rôle dans la perception visuelle. Ces données sont notamment relatives à :
- à l'âge ;
- le genre de l'observateur ;
- un modèle numérique de profil de vision relatif à l'état comportemental identifié, un tel modèle ayant été généré par un algorithme notamment un algorithme d'apprentissage et ce, sur la base de caractéristiques comportementales de l'observateur.

Concernant les données de profil de vision de l'observateur et de profil de vision de l'état comportemental identifié de ce dernier, on notera qu'il convient également de prendre en compte les éléments contextuels suivants :
- la période de la journée par exemple pour tenir compte du rythme circadien relatif à l'observateur ;
- la date et l'année où l'observateur contemple ou manipule l'objet décoratif 2 ;
- la géolocalisation du dispositif de présentation 1 et donc du lieu où se situe ce dispositif de présentation 1 ;
- le spectre et l'intensité de la lumière du jour dans le cas où le caisson 4 est disposé dans une telle lumière, et
- les caractéristiques de sécurité photobiologique visuelle comprenant par exemple les normes/sécurités relatives à un temps d'exposition visuelle lié à une longueur d'onde lumineuse.

Lorsque l'observateur n'est pas connu du dispositif de présentation 1, la configuration de l'éclairement va alors être réalisée par l'unité de traitement 10 connectée au système d'éclairement 7, sur la base de critères de perception visuelle évalués à partir de données comprises dans la base de données 13 relatives :
- au profil de vision relatif à l'état comportemental identifié de cet observateur que nous avons détaillé précédemment, et/ou
- à des caractéristiques de l'objet décoratif 2 identifié également évoquées précédemment.

Dans ce contexte, l'unité de traitement 10 est apte alors à générer une instruction de pilotage de propriétés d'éclairage du dispositif d'éclairage principal 8a et/ou du dispositif d'éclairage secondaire 8b en fonction des critères de perception visuelle relatifs à l'observateur. On notera que ces critères de perception visuelle visent à caractériser/quantifier une perception visuelle optimale de l'observateur connu ou inconnu du dispositif de présentation 1 et ce, en fonction de données de profil de vision de l'observateur identifié et de profil de vision de l'état comportemental identifié de ce dernier, et de données de caractéristiques de l'objet décoratif identifié.

Les propriétés d'éclairage des dispositifs d'éclairage principal et secondaire 8a, 8b que nous venons d'évoquer, comprennent :
- le spectre lumineux de chaque diode électroluminescente constituant chacun de ces dispositifs d'éclairage 8a, 8b ;
- l'intensité/amplitude du rayonnement lumineux de chaque diode électroluminescente constituant chacun de ces dispositifs d'éclairage 8a, 8b ;
- l'orientation et/ou le degré de directivité et/ou la diffusion du rayonnement lumineux produit par l'ensemble des diodes électroluminescentes constituant chacun de ces dispositifs d'éclairage 8a, 8b, comme par exemple une sphère intégrante.

L'unité de traitement 10, après avoir générée les instructions de pilotage des propriétés d'éclairage du dispositif d'éclairage principal 8a et/ou du dispositif d'éclairage secondaire 8b, va alors les exécuter. Cette exécution va permettre ainsi à l'unité de traitement 10 d'agir sur :
- le spectre lumineux et/ou l'intensité/amplitude du rayonnement lumineux de tout ou partie des diodes électroluminescentes du dispositif d'éclairage principal 8a et/ou du dispositif d'éclairage secondaire 8b ;
- l'orientation et/ou le degré de directivité et/ou la diffusion du rayonnement lumineux émanant du dispositif d'éclairage principal 8a et/ou du dispositif d'éclairage secondaire 8b par exemple à partir de :
   ▪ l'extinction sélective ou l'allumage sélectif de diodes électroluminescentes du dispositif d'éclairage principal 8a et/ou du dispositif d'éclairage secondaire 8b, ou
   ▪ l'orientation du rayonnement lumineux du dispositif principal et/ou du dispositif d'éclairage secondaire 8b, dont les diodes sont chacune pourvue par exemple d'une microlentille ou d'autres moyens optiques.

Ainsi que nous l'avons précisé, le dispositif de présentation 1 comprend un dispositif de surveillance 15 de la tête de l'observateur ainsi qu'un dispositif de mesure de la luminance 16 relative à une partie d'une surface de l'objet décoratif 2 qui sont tous deux reliés à l'unité de traitement 10. Ce dispositif de surveillance 15 comprend des systèmes de capture d'au moins une image, associés à des algorithmes de traitement numérique d'images ainsi qu'un oculomètre ou un pupillométrie. Un tel dispositif de surveillance 15 est apte à :
- déterminer des mouvements et positions de la tête de l'observateur relativement au reste de son corps ;
- interpréter des expressions particulières du visage de l'observateur ;
- identifier des changements d'expression du visage de l'observateur ;
- mesurer et enregistrer les trajets oculaires de l'observateur en déterminant par exemple la direction ou l'orientation du regard de l'observateur relativement à l'objet.

Un tel dispositif de surveillance 15 participe notamment à réévaluer les critères de perception de l'objet décoratif 2 par l'observateur et ce, dans l'optique de modifier l'éclairement de la zone d'intérêt 3 sur la base de critères de perception visuelle réévalués. En étant notamment reliée à un tel dispositif de surveillance 15, l'unité de traitement 10 est par exemple apte à identifier un état de fatigue et/ou d'une gêne visuelle de l'observateur qui est susceptible d'altérer sa perception visuelle de l'objet décoratif 2. Un tel état de fatigue et/ou de gêne visuelle peut par exemple engendrer ou être la cause d'une perte d'attention ou, d'un manque ou d'une perte de concentration de cet observateur. Dans ce contexte, un état de fatigue de l'observateur ou encore une gêne visuelle peut être engendré par un éclairement de la zone d'intérêt 3 et plus particulièrement de l'objet 3, qui n'est pas approprié. Dans un tel contexe, l'unité de traitement 10 effectue un traitement des données qu'il reçoit des dispositifs suivants :
- le dispositif de surveillance 15 de la tête de l'observateur ;
- le dispositif de mesure de la luminance 16 résultant d'une partie d'une surface de l'objet sur laquelle se porte ou est posé le regard de l'observateur ;
- le dispositif de mesure de paramètres physiologiques et/ou biologiques 17 de l'observateur.

Dans cette configuration, le dispositif de surveillance 15 transmet des données telles qu'une image ou une séquence d'images ou encore une vidéo du visage de l'observateur sur la base desquelles données l'unité de traitement 10 réalise un traitement numérique permettant par exemple de détecter une expression particulière de ce visage telle qu'un clignotement de paupière indiquant un état de fatigue ou une gêne visuelle par le froncement des sourcilles. S'agissant du dispositif de mesure de la luminance 16, il est apte à transmettre à l'unité de traitement 10 des données de mesure de luminance relatives à la partie de la surface de l'objet 3 sur laquelle se porte ou est posé le regard de l'observateur, et détermine par exemple en fonction d'une valeur de référence de luminance si la ou les mesures effectuées révèlent une gêne visuelle de cet observateur, engendrée par un éclairage de la zone d'intérêt 3 et plus particulièrement de cette partie de la surface de l'objet décoratif 2 qui n'est pas adapté. Concernant le dispositif de mesure de paramètres physiologiques et/ou biologiques 17 de l'observateur, il transmet à l'unité de traitement 10 des données de mesure de l'état physiologique et/ou biologique de l'observateur.

Dans ce contexte, l'unité de traitement 10 est alors apte à générer des critères de perception visuelle réévalués dès lors qu'un état de fatigue et/ou une gêne visuelle de l'observateur est identifié. Pour ce faire, cette unité de traitement 10 met en œuvre des opérations de calcul visant à modifier les valeurs des critères de perception visuelle précédemment calculées et ce, à partir d'un indice de correction caractérisant le niveau de l'état de fatigue et/ou de gêne visuelle de l'observateur. On notera que l'unité de traitement 10 effectue une telle réévaluation périodiquement selon :
- un intervalle de temps prédéfini qui est configurable ;
- une détection d'un changement de direction/d'orientation du regard de l'observateur relativement à l'objet décoratif 2 ;
- une détection d'une manipulation de l'objet décoratif 2;
- une détection d'un déplacement de l'objet décoratif 2 ;
- une détection d'un changement d'au moins une propriété optique de l'objet décoratif 2 ;
- une détection d'une observation par l'observateur d'une nouvelle partie de la surface de l'objet décoratif 2 ;
- une détection d'une variation d'au moins un paramètre physiologique et biologique de l'observateur.

Ainsi cette unité de traitement 10 réalise ensuite un contrôle du dispositif d'éclairage principal 8a et/ou du dispositif d'éclairage secondaire 8b en fonction d'une nouvelle instruction de pilotage des propriétés d'éclairage résultant des critères de perception visuelle réévalués.

De manière optionnelle, le dispositif de présentation 1 peut comprendre des hauts parleurs reliés à l'unité de traitement 10 et qui sont susceptibles de créer une ambiance sonore accompagnant l'éclairement de la zone d'intérêt 3 comprenant l'objet décoratif 2 en fonction notamment de l'état comportemental identifié de l'observateur.

En outre, le dispositif de présentation 1 peut comprendre une interface homme machine à partir de laquelle divers scénarios dits d'ambiance visuelle et/ou sonore archivés dans la base de données 13, peuvent être déclenchés. Ainsi, les propriétés d'éclairage des dispositifs d'éclairage principal 8a et/ou secondaire 8b sont alors contrôlées dans un environnement sonore prédéfini et ce, selon le scénario sélectionné.

## Revendications

1. Dispositif de présentation (1) d'un objet décoratif (2), comprenant un caisson (4) pourvu d'un élément de support (5) sur lequel est définie une zone d'intérêt (3) dans laquelle est susceptible d'être disposé et/ou manipulé ledit objet décoratif (2), le dispositif de présentation (1) comportant :
- des dispositifs d'identification (6a, 6b) de l'observateur et de l'objet décoratif (2) ;
- un système d'éclairement (7) de la zone d'intérêt (3) comprenant un dispositif d'éclairage principal (8a) et un dispositif d'éclairage secondaire (8b) pourvus d'éléments électroluminescents qui sont configurés pour réaliser l'éclairement de cette zone d'intérêt (3) en fonction du profil de vision de l'observateur et/ou en fonction d'un état comportemental de l'observateur et/ou en fonction de caractéristiques de l'objet (3) ;
- une unité de traitement (10) configurée pour :
▪ générer une instruction de pilotage des propriétés d'éclairage du dispositif d'éclairage principal (8a) et/ou du dispositif d'éclairage secondaire (8b) en fonction de critères de perception visuelle de l'objet (3) par l'observateur ;
▪ contrôler le dispositif d'éclairage principal (8a) et/ou le dispositif d'éclairage secondaire (8b) en fonction de ladite instruction de pilotage des propriétés de ces dispositifs d'éclairage (8a, 8b).

2. Dispositif de présentation (1) selon la revendication précédente, **caractérisé en ce que** le dispositif d'identification (6a) comprend un module d'authentification (11a) de l'observateur et un module d'indentification (11b) d'un état comportemental de cet observateur.

3. Dispositif de présentation (1) selon l'une quelconque des revendications précédentes, **caractérisé en ce que** le caisson (4) comprend une base (12a) et un plafond (12b) ainsi que des faces latérales, arrière et frontale délimitant avec cette base (12a) et ce plafond (12b) un volume intérieur dans lequel est définie la zone d'intérêt (3), ledit caisson (4) présentant une zone de visualisation de l'objet depuis l'extérieur comprise en tout ou partie dans la face frontale.

4. Dispositif de présentation (1) selon l'une quelconque des revendications précédentes, **caractérisé en ce que** l'unité de traitement (10) est reliée :
- aux dispositifs d'identification (6a, 6b) de l'observateur et de l'objet décoratif (2), et
- à une base de données (13) comprenant des données de profil de vision de l'observateur, des données de profil de vision relatif à l'état comportemental de l'observateur, des données de caractéristiques d'objets décoratifs et des données d'identification de l'observateur et/ou de l'objet.

5. Dispositif de présentation (1) selon l'une quelconque des revendications précédentes, **caractérisé en ce que** le dispositif d'éclairage principal (8a) comprend un premier module d'éclairage (9a), un deuxième module d'éclairage (9b) et/ou un troisième module d'éclairage (9c) pourvus chacun :
- d'une pluralité d'éléments électroluminescents, ou
- d'un unique élément électroluminescent qui est couplé à un modulateur.

6. Dispositif de présentation (1) selon la revendication précédente, **caractérisé en ce que** :
- le premier module d'éclairage (9a) est agencé au-dessus de la zone d'intérêt (3) et donc du plateau de l'élément de support (5) ;
- le deuxième module d'éclairage (9b) est disposé en dessous de la zone d'intérêt (3) et donc du plateau de l'élément de support (5), et
- le troisième module d'éclairage (9c) est agencé dans la périphérie de la zone d'intérêt (3) et donc du plateau de l'élément de support (5).

7. Dispositif de présentation (1) selon l'une quelconque des revendications précédentes, **caractérisé en ce que** le dispositif d'éclairage principal (8a) comprend un élément de réglage (14) agencé en tout ou partie autour de la zone d'intérêt (3) et s'étendant verticalement entre la base (12a) et le plafond (12b) du caisson (4).

8. Dispositif de présentation (1) selon la revendication précédente, **caractérisé en ce que** l'élément de réglage (14) en étant contrôlé par l'unité de traitement (10) peut varier entre les états suivants :
- un état de réflectance d'un rayonnement lumineux provenant du premier, deuxième ou troisième module d'éclairage (9a, 9b, 9c) vers la zone d'intérêt (3), et
- un état de diffusion des rayonnements lumineux provenant du dispositif d'éclairage secondaire (8b) vers la zone d'intérêt (3).

9. Dispositif de présentation (1) selon l'une quelconque des revendications précédentes, **caractérisé en ce qu'**il comprend un dispositif de surveillance (15) de la tête de l'observateur contemplant l'objet décoratif (2) et un dispositif de mesure de la luminance (16) perceptible par l'œil de cet observateur.

10. Dispositif de présentation (1) selon l'une quelconque des revendications précédentes, **caractérisé en ce que** le dispositif d'éclairage secondaire (8b) est agencé à l'extérieur du caisson (4) notamment au-dessus de ce caisson (4).

11. Dispositif de présentation (1) selon l'une quelconque des revendications précédentes **caractérisé en ce que** l'objet décoratif (2) est une pièce de bijouterie ou une pièce d'horlogerie.
